# EUROPEAN PATENT APPLICATION

(11) **EP 1 246 463 A2**
(43) Date of publication of application: **02.10.2002**
(21) Application number: 02250970.7
(22) Date of filing: 13.02.2002
(51) Int. Cl.: H04N 5/913

(54) **Recording and reproducing device, control method and abuse prevention system**

(30) Priority: 30.03.2001 JP 2001099850
(71) Applicant: MATSUSHITA ELECTRIC INDUSTRIAL CO., LTD., Kadoma-shi, Osaka-fu (JP)
(72) Inventor: Murase, Kaoru, Ikaruga-cho, Ikoma-gun, Nara-ken (JP); Miyazaki, Masaya, Ikeda-shi, Osaka-fu (JP); Ito, Yoshikatsu, Hirakata-shi, Osaka-fu (JP)
(74) Representative: Dempster, Benjamin John Naftel

(57) **Abstract**

The invention has an object to provide a recording and reproducing device capable of protecting the copyright stronger than ever by detecting the abuse when the information having the copyright is utilized fraudulently and revoking the device in which the abuse is performed, if necessary.

In the recording and reproducing device, the detecting unit (116) detects the abuse of the digital content data and the control program controlling the recording and reproducing device, and the revoking unit (117) halts the use of the recording and reproducing device when the detecting unit (116) detects the abuse.

## Description

This invention relates to a recording and reproducing device, a control method, and an abuse prevention system. And, more specifically, this invention relates to the recording and reproducing device, the control method and the abuse prevention system for preventing the abuse of digital content data with the copyright.

In these days, the means for information communication is being digitalized rapidly. Since a great deal of the merits can be found in the broadcasting field, the analogue broadcast is proceeding to the digital broadcast. The merits of the digital broadcast against the analogue broadcast is that it is easy to improve the broadcasting to multi-channels and the high picture quality, in addition it is possible to carry out the services for the two-way communication. The standardization of the digital content data of the video and audio especially has a great influence on the background of this progress. Specifically, on the basis of MPEG (Moving Picture Experts Group), followings have been regulated: MPEG1 (compression of moving images for storage medium such as CD-ROM, and etc.), MPEG2 (compression of moving images corresponding to preparation and transmission of HDTV (High Definition Television)), and MPEG4 (compression of moving images corresponding to the low-rate network). For instance, in the broadcast filed, the broadcast station sends the data by means of MPEG2, while the receiving side receives and reproduces the data by a device provided with the decoding function of MPEG2 called STB (Set Top Box) through antenna or cable.

In this case, the digital content data is coded and then provided by the sending side, while the decoding key for the decoding is given only to a device used by an authorized user who makes a contract to pay the copyright fee, in result only the authorized user can use or listen the digital content data.

Moreover, it is required in the digital broadcast that the program can be recorded (stored) as well as in the conventional analogue broadcast. It is easy to record the received data without deteriorating the image and voices because the content data is digitalized. However, it is also easy to copy the recoded data without the deterioration, so that the subject of copyright is aroused. Consequently, the technology is necessary in order to settle the copyright subject related to the management of the recoded data.

Regarding the information having the copyright (digital content data), the representative technology to settle the copyright subject is DTCP (Digital Transmission Content Protection) applied to the digital device on the basis of IEEE 1394, for example. The technology is concerned with the sending and receiving of the digital content data; the digital content data includes as the copy control information (CCI), "Copy Never, No More Copies"(the inhibition of copying), "Copy One Generation" (copying permitted for only one-generation), and "Copy Free" (copying freely). According to the copy control information, the authentication is performed by the copy-origin device and the copy-destination device (recording medium). If there is no trouble with the authentication processing, the encrypted digital content data and the key information used for the encryption are exchanged each other, thereby it is possible to copy. It is needless to say that the data including the "Copy Never" information cannot be copied. Accordingly, if the digital content data is provided with the copy control information, it is possible to suffice both the copyright protection and the improvement of user's facility.

In addition, considering the following problems, it can be seen that the copy control information is going to be extended. That is to say, if the digital content data recorded in an obtained storage medium is permitted to be copied only for one generation (Copy One Generation), it occurs that after the user has recorded the digital content data in a storage medium once, the digital content data cannot be moved to other different storage medium. Specifically, in case of storing in a storage medium the digital content data of "Copy One Generation" received by the user, it is general that the storage medium is a fixed one like HDD (Hard Disk Drive), of which access rate is high and which is convenient for use. However, since the fixed recording medium is limited in the storage size and used at any time, it is easy to suffer damages more than the removable storage medium. Therefore, the digital content data that the user desires to store for a long term after his listening is preferable to move to a removable storage medium of which storage size is not limited and which is convenient for the storage, like DVD-RW, and so on.

However, the digital content data recorded once is inhibited from copying (No More Copies), that is to say, it is not possible to move the data from HDD, therefore, it means that only processing of the reproduction or the deletion can be performed regarding the digital content data.

As far as only the copy control information is given to the digital content data as described above, the user's facility is not high. However, by adding the "move" as the copy control information to the data, for example, it is possible to improve the user's facility. The "move" is to move the digital content data from a specific medium to other different medium, and the digital content data stored in a media of the copy-origin is sure to be made into impossible of use (reproduction or copy).

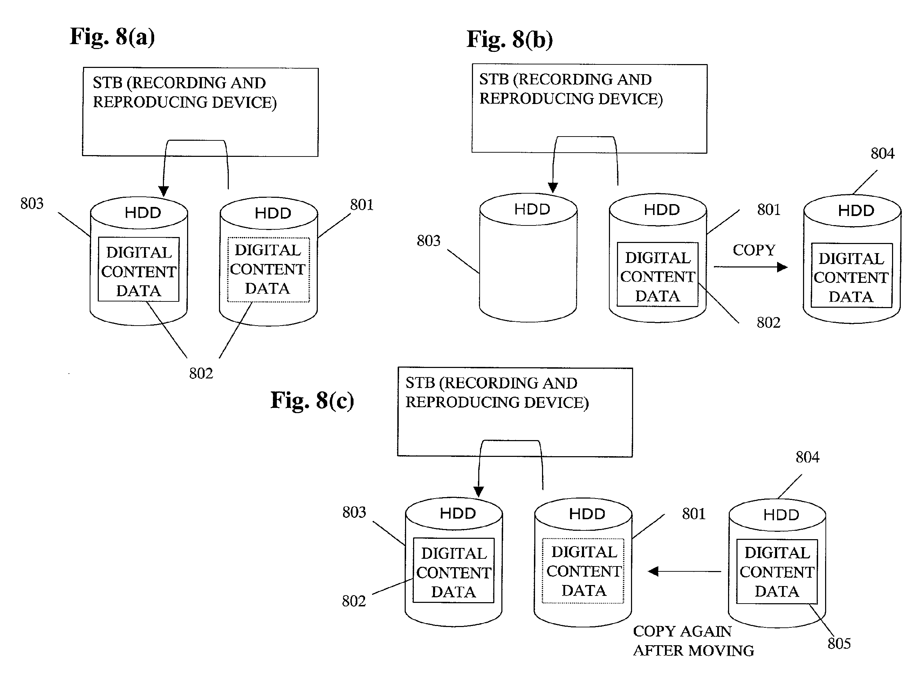

However, HDD applied to the STB to store the digital content data tends to use the same type as the one adopted by the popular personal computer in order to reduce the cost. Accordingly, HDD can be connected with a personal computer easily. The personal computer can copy (physically) the digital content data stored in the HDD by means of available software. Specifically, as shown in Fig. 8(a), in case where the digital content data 802 stored in HDD 801 moves (copies) to HDD 803 by using the STB normally, the digital content data 802 is decoded temporarily, coded again, and then stored in HDD 803. At this time, the digital content data 802 is deleted from the HDD 801. However, as shown in Fig. 8(b), the digital content data 802 previously stored in the HDD 801 is copied (physically) to a different HDD 804 by using the popular personal computer illegally, thereby it is possible to move the digital content data 802 from HDD 801 to HDD 803 as shown in Fig. 8(c). That is to say, at this time, the digital content data 805 is copied (physically) from HDD 804 to HDD 801, so that it is possible to copy the digital content data so as to reproduce them without connecting the different HDD and the STB. In addition, even in case where the copyright is protected by means of a unique ID of HDD, since the HDD itself does not change, in result the above method has allowed the abuse of information including copyright. Therefore, it has a limit that the technology for the protection of copyright is simply given to the digital content data itself, therefore stronger system for the protection of copyright is required now.

In other words, to improve the user's facility as above is to give a malicious person a chance of the abuse. Specifically, in order to execute the functions of "copy one generation" or "move", the hardware side such as STB has to be provided with a system for interrupt and execute these functions. However, the more complicated the function becomes, the more complicated the system for the function becomes. In results, malicious persons get rooms for the intervention, which means that it increases rooms for giving the fraudulent alteration to devices like STB. Since the fraudulent alteration permits the device to copy the information with the copyright, the fraudulent alteration is an extremely malicious act.

The present invention is proposed considering the above conventional conditions, and has an object to provide the recording and reproducing device, the control method, the abuse prevention system to protect the copyright stronger than ever by detecting the abuse when the information having the copyright is used fraudulently, and revoking the device performing the abuse on demand.

The invention adopts the following unit in order to achieve the above object. That is to say, the invention is assumed to be a recording and reproducing device recording and reproducing specific digital content data. In the invention, detecting unit detects the abuse of the control program controlling the recording and reproducing device, while revoking unit halts the use of the recording and reproducing device on the basis of the detecting result of the abuse detected by the detecting unit.

The invention is provided with the detecting unit, which detects the fraudulent alteration of the recording unit. In addition, if the detecting unit detects the abuse, the revoking unit halts the operation of the recording and reproducing device. In result, it is possible to provide a stronger system of the copyright protection not only to the digital content data with the copyright but also the recording and reproducing device.

To detect the abuse of the digital content data is detected, the detecting unit comprises abuse prevention information calculating unit for calculating the abuse prevention information by means of the recorded digital content data and a specific function, abuse prevention information storage unit to store the abuse prevention information calculated by the abuse prevention information calculating unit, and comparing unit operable to compare, if necessary, the abuse prevention information stored in the abuse prevention information storage unit and the one calculated separately by the abuse prevention information calculating unit, and judging the abuse on the basis of the comparing result.

To detect the abuse of the control program is detected, the detecting unit comprises the abuse prevention information calculating unit for calculating the abuse prevention information by means of the control program controlling the recording and reproducing device and a specific function, the abuse prevention information storage unit to store the abuse prevention information calculated by the abuse prevention information calculating unit, and the comparing unit to compare, if necessary, the abuse prevention information stored in the abuse prevention information storage unit and the one calculated separately by the abuse prevention information calculating unit, and judging the abuse on the basis of the comparing result.

Under the above configuration, it is possible to prevent the abuse of not only the digital content data but also the control program.

Besides, it can be arranged in the invention that the detecting unit send the detecting result to a specific abuse detecting server when the abuse can be detected. At this time, a unique ID specifying the recording and reproducing device may be sent.

The invention is arranged so as to send the state of the abuse and the information for specifying the recording and reproducing device to the abuse detecting server of an external device separated from the recording and reproducing device, thereby it is possible to know the actual conditions of the abuse that has not been known. Additionally, the invention has the effect of checking that the user is going to use the recording and reproducing device fraudulently.

The revoking unit halts the use of the recording and reproducing device on the basis of the instruction sent from the abuse detecting server or the instruction stored in the digital content data sent from the broadcast station, and then dissolves the halt of the use on the basis of a specific order. Under such configuration, it is possible to control the use of the recording and reproducing device from a remote place; therefore the flexible operation is made possible.

Moreover, in the abuse prevention system, the recording and reproducing device comprises the detecting unit for detecting the abuse of the digital content data or the control program controlling the recording and reproducing device, sending unit for sending to the abuse detecting server the detecting result of the abuse detected by the detecting unit at specific time intervals, and the revoking unit for determining whether the recording and reproducing device is usable or not on the basis of the instruction sent from the abuse detecting server. The abuse detecting server is arranged to determine whether the recording and reproducing device is usable or not corresponding to the detecting result of the abuse sent from the recording and reproducing device and to send the instruction corresponding to the determination to the recording and reproducing device.

Under such configuration, the control instruction of the operation sent from the abuse detecting server allows that the recording and reproducing device can be operated only for the specific period. Thereby, it is possible to prevent the abuse from the user who is not connected with the network for fear of being detected.

Fig. 1 is a schematic functional block diagram of the recording and reproducing device in the embodiment 1.

Fig. 2 is a schematic functional block diagram of the detecting unit in the embodiment 1.

Fig. 3 is a flowchart showing the processing of the detecting unit.

Fig. 4 is flowcharts of the detecting and revoking unit in the embodiment 2.

Fig. 5 is a schematic functional block diagram of the recording and reproducing device in the embodiment 2.

Fig. 6 is a schematic functional block diagram of the detecting unit in the embodiment 2.

Fig. 7 is a block diagram of the abuse prevention system.

Fig. 8 is an image view for explaining the abuse.

The preferred embodiments of the invention are explained hereafter according to the drawings, in order to be offered to the comprehension of the invention. Besides the following embodiments are only examples materializing the invention, and do not restrict the technical filed of the invention.

### [EMBODIMENT 1]

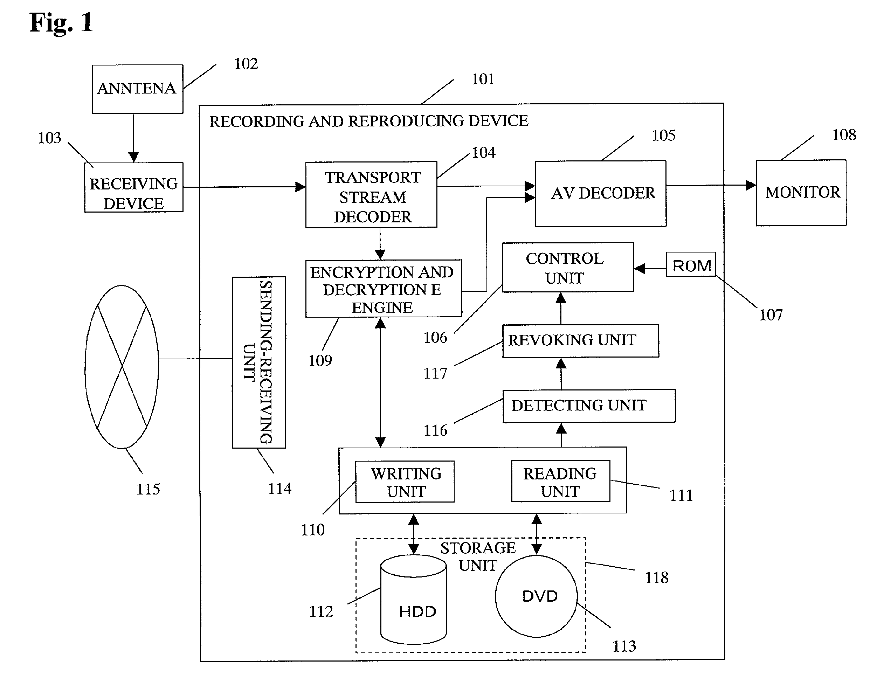

According to Figs. 1, 2, 3 and 8, the processing that the recording and reproducing device of the invention records and reproduces digital content data is explained here in detail. The digital content data contains the information related to the copyright protection such as the control information for controlling the audio and video data, the key to be used for the authentication and encryption, the copy control information, and the use conditions, in addition to the audio and video information. Besides, a recording and reproducing device 101 is offered as STB described in the prior arts, for example. Each unit comprising the recoding and reproducing device 101 is managed by control unit 106. The control of each unit is carried out by the control unit 106, wherein CPU reads and executes the control program stored in the nonvolatile memory (ROM) at any time.

The first explanation refers to a method for reproducing a program (digital content data) broadcasted by a broadcast station. Receiving device 103 receives the carrier wave broadcasted (transmitted) from the broadcast station through a communication satellite and antenna 102, and then prepares TS packet (Transport Stream Packet) according to the predetermined regulations. Since the TS packet has been standardized by MPEG2, the explanation about this is not made here.

The prepared TS packet is sent one after another to a transport stream decoder 104 constructing the recording and reproducing device 101. After receiving the TS packet, if the received TS packet is scrambled, the transport stream decoder 104 descrambles the TS packet by means of a specific decoding key and generates the digital content data. Besides, when the received TS packet is descrambled, the authentication whether the user is the authorized one for the digital content is executed by means of the terminal ID of the recording and reproducing device. The digital content data contains the video and audio data of the broadcast program, the control information for control the reproduction of the audio and video data included in the broadcast program, the authentication information of users, and the copy control information.

The digital content data is converted to video output signals or audio output signals by AV decoder 105, and then sent to monitor 108 of TV, for example. The monitor 108 reproduces each signal.

In addition, when the digital content data is stored, encryption and decryption engine 109 encrypts the digital content data outputted from the transport stream decoder 104 on demand, and writing unit 110 stores the data in storage unit such as HDD 112 or DVD 113 (DVD-RAM). Besides, at this time, the copy control information is also encrypted by the encryption key. The content key, which is used when the encryption and decryption engine 109 encrypts the digital content data and the copy control information, is encrypted by means of a set-unique key of the recording and reproducing device 101, which is stored in the storage unit as the encryption content key. However, when the content of the copy control information of the digital content data is confirmed at this time that it is "No more copies", it is arranged that it is not possible to store the digital content data.

On the other hand, when the digital content data stored in the storage unit is reproduced, reading unit 111 reads out the object digital content data from the storage unit and sends the data to the encryption and decryption engine 109. At receiving the digital content data, the encryption and decryption engine 109 decrypts the received digital content data and then sends the data to the AV decoder 105. The AV decoder 105 converts the digital content data to audio output signals and video output signals, which are sent to the monitor 108 of TV, for example. The monitor 108 reproduces each signal.

According to the above processing, the digital content data is reproduced and stored. The digital broadcast has a various broadcast plans using the two-way communication. The recording and reproducing device of the invention is provided with sending-receiving unit 114, thereby the device is connected with a network 115 so as to go into the communication like the Internet, for example. Besides, the above each unit is the same as those comprising the conventional popular recording and reproducing device.

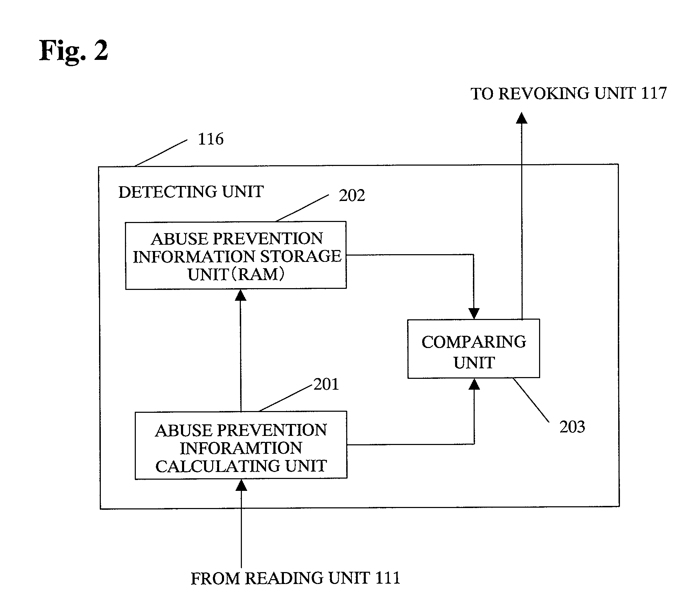

The recording and reproducing device 101 of the embodiment 1 is further provided with detecting unit 116 and revoking unit 117. Fig. 2 is a schematic functional block diagram of the detecting unit in the embodiment 1.

The under mentioned description is about the detailed processing of the detecting unit 116 and the revoking unit 117 where the digital content data is stored in HDD 112, for example.

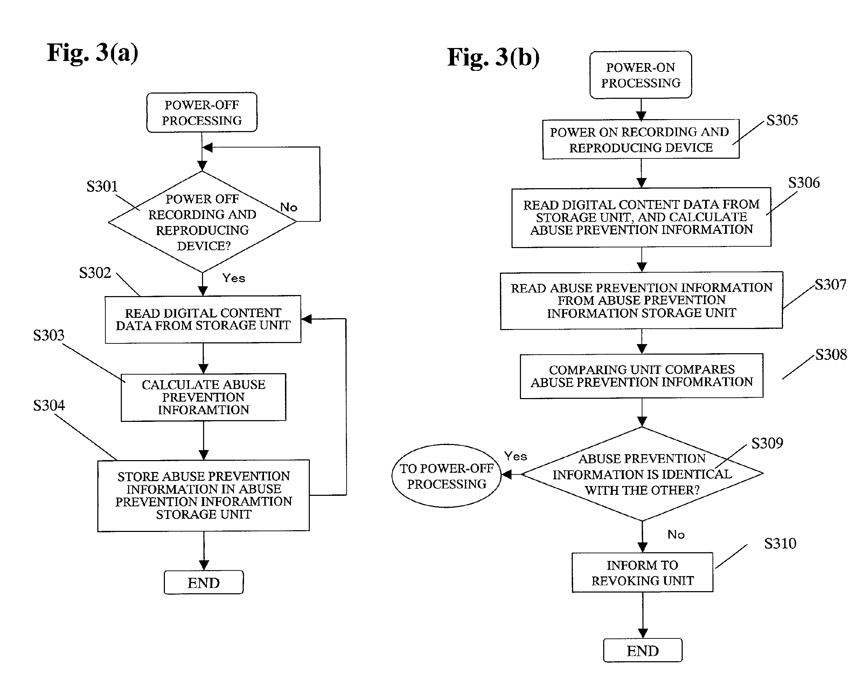

When the recording and reproducing device 101 is operated normally, the detecting unit 116 judges whether the recording and reproducing device 101 is powered off or not. (Fig. 3(a): S301).

If the device is powered off, the reading unit 111 reads out at a specific time the digital content data stored in HDD 112, for example (Fig. 3(a): S301 Yes to S302). The digital content data to be read out may be the entire of the recorded digital content data or only the information related to the copyright protection, like keys to be used for the encryption or decryption, the copy control information, the use conditions, and etc. The use conditions are the information about the number of the reproducible frequency or the term of the validity of the digital content data.

After receiving the digital content data, Abuse Prevention Information calculating unit 201 comprising the detecting unit 116 calculates a hash value (abuse prevention information) of the digital content data by means of the hash function (Fig. 3(a): S303). The abuse prevention information calculated from the received digital content data by means of the hash function becomes one value as long as the digital content data is not changed (altered). And it is not possible to calculate the digital content data from the calculated abuse prevention information. In case where the digital content data is big in size, the hash value may be calculated only regarding the necessary minimum parts, for example, parts of the digital content data relative important to the copyright protection, such as the encryption content key, the copy control information, and the content ID (file name at the registration).

The API calculating unit 201, which calculates the abuse prevention information for the digital content data, stores the calculated abuse prevention information in Abuse Prevention Information storage unit 202 comprising the detecting unit 116 (Fig. 3(a): S304). The API storage unit 202 is a nonvolatile storage device (RAM, for example) specifically, and configured as a separated medium from the storage unit.

According to the above processing, the abuse prevention information of the digital content data stored in HDD 112 is to be stored in the API storage unit 202 at any time. Besides, the above processing S301 to S304 are executed when the recording and reproducing device 101 is powered off, however it may be executed repeatedly at a specific timing, for example. The specific timing means the time when the digital content data in HDD is updated or specific time intervals.

The processing when the data is update is explained in brief according to Fig. 8. In Fig. 8(a), it is assumed that the digital content data 802 is moved from HDD 801 to HDD 803. At the beginning, the API storage unit 202 in STB stores the abuse prevention information of HDD 801 before the moving. Under this arrangement, where the digital content data 802 is moved from HDD 801 to HDD 803, after the moving the digital content data 802 in HDD 801 is deleted. That is to say, it means that HDD 801 is updated. When HDD 801 is updated, the update information is sent from the control unit 106 to the detecting unit 116, for example. The detecting unit 116 in response to the update information reads out the digital content data in HDD 801, while the API calculating unit 201 calculates the abuse prevention information again and then stores the data in the API storage unit 202. Accordingly, the abuse prevention information of the digital content data stored in HDD is to be stored at any time in the API storage unit 202.

The above description is about the working when the recording and reproducing device 101 is operated normally, however, where the recording and reproducing device 101 is powered on after the device was powered off temporarily, the power-on processing as shown in Fig. 3(b) is executed.

In the processing at the time of power-on, the detecting unit 116 reads out the digital content data stored in HDD 112 by the reading unit 111, and then calculates the abuse prevention information corresponding to the digital content data. After that, the abuse prevention information is transmitted to comparing unit 203 (Fig. 3(b): S305 to S306). Meanwhile, the comparing unit 203 reads out the abuse prevention information that has been stored in the API storage unit 202 (Fig. 3(b): S307).

Next, the comparing unit 203 compares the abuse prevention information read from the API storage unit 202 and the one calculated by the API calculating unit 201 (Fig. 3(b): S308).

At this time, if the above two pieces of the abuse prevention information are the same one, it means that the digital content data stored in HDD 112 was not altered for the time the recording and reproducing device was powered off. Therefore, the normal processing S302 to S304 are repeated after this (Fig. 3(b): S309 Yes to Fig. 3(a) S301).

If the above two pieces of the abuse prevention information are different each other, it means that the digital content data stored in HDD 112 was altered without intervening the recording and reproducing device for the time the recording and reproducing device was powered off. Therefore, the comparing unit 203 notifies the revoking unit 117 of the alteration (Fig. 3(b): S309 No to S310).

Specifically, the comparing unit 203 sends the notice to the revoking unit when the abuse is performed as follows. In other words, in Fig. 8(b), in case where the digital content data 802 in HDD 801 is moved to HDD 803, the digital content data in HDD 801 should be deleted while the abuse prevention information in the API storage unit 202 of the detecting unit 116 should be updated. At this time, as described in the prior arts, where HDD is copied physically, the digital content data 805 is copied to HDD 801 again, thereby the conditions of HDD 801 can be recovered to the original (the state including the digital content data 802). However, it is a fraudulent use, and it should not be allowable. Therefore, the comparing unit detects the difference between the abuse prevention information stored in the API storage unit 202 and the one of HDD recovered to the original, if the abuse (the alteration of the digital content data) can be found, the abuse is notified to the revoking unit 117.

Therefore, the detecting unit 116 can detect the abuse of the storage unit 118 (HDD 112, DVD113, and etc., for example); that is to say, the alteration of the digital content data can be detected.

Besides, there is a possibility that the storage unit 118 is detachable. In this case, the detecting unit 116 is arranged to store in the API storage unit 202 the abuse prevention information being correlated the unique ID stored in the storage unit, thereby it is possible to detect the abuse per storage unit.

If HDD can perform plug and play (exchange under the power-on), the comparing unit 203 may perform the processing for comparing the abuse prevention information at the plug and play (the power-on processing).

Next, after receiving from the detecting unit 116 that the digital content data stored in HDD 112 was altered, that is, the abuse was performed, the revoking unit 117 sends the control unit 106 the instruction to halt the recoding and reproducing processing of the recording and reproducing device 101, thereby it aborts the use (working) of the recording and reproducing device. Besides, the method of halting the use of the recording and reproducing device is not restricted to this, but it can be considered as a following case.

In case where the control unit 106 controls the recording and reproducing device 101, a function is provided for checking an operation flag. If the operation flag is "0", the recording and reproducing device is usable normally. In this case, the revoking unit 117 can halt the working of the recording and reproducing device by changing a specific operation flag to "1".

The recording and reproducing device in this embodiment can delete and alter the necessary parts of contents in ROM 107 storing the control program for operating the control unit 106.

In addition, it is possible to halt the working of the recording and reproducing device by changing the value of the abuse prevention information stored in the API storage unit 202.

As described above, the recording and reproducing device of the invention is provided with the detecting unit for detecting the fraudulent alteration of the storage unit. When the detecting unit detects the abuse, the revoking unit halts the working of the recording and reproducing device. Therefore, it is possible to offer the stronger system for the copyright protection to not only the digital content with the copyright but also the recording and reproducing device.

The embodiment 1 describes about the example using the hash function, however, the function is not restricted to the hash function. The function may be the one that can derive unique abuse prevention information from the digital content data.

### [EMBODIMENT 2]

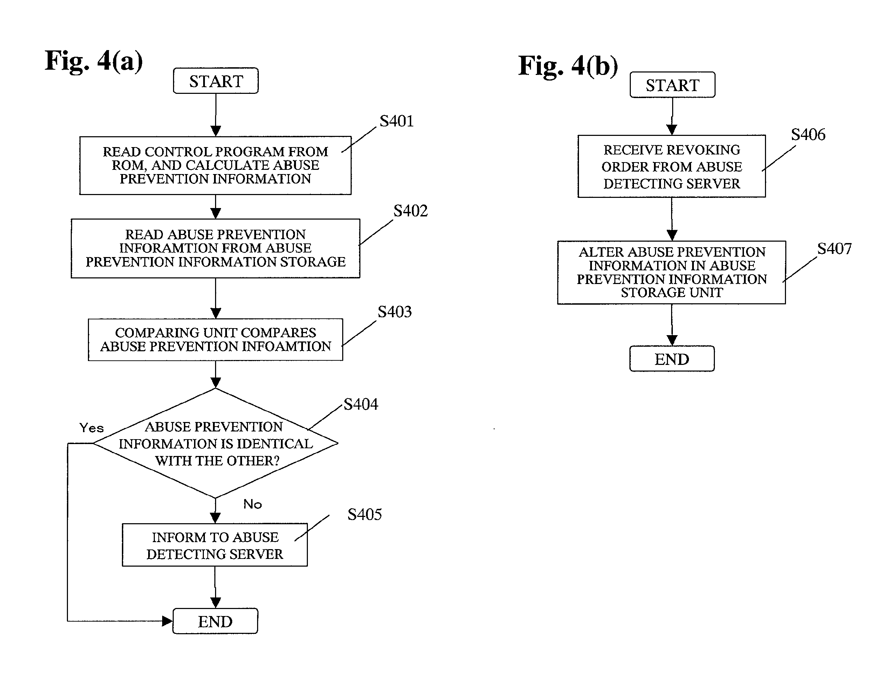

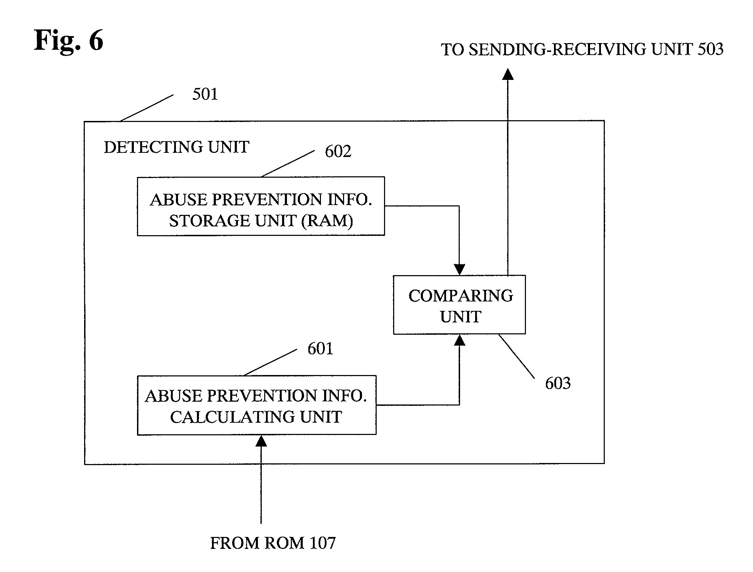

According to Figs. 4, 5, 6, and 7, the recoding and reproducing device in the embodiment 2 is explained as follows. Since the recording and reproducing device in the embodiment 2 has many things in common with the one in the embodiment 1, this embodiment refers only to the different points.

In the embodiment 2, the Abuse Prevention Information calculating unit 601 comprising the detecting unit 501 reads the control program stored in ROM 107, and calculates the abuse prevention information. The calculated information is sent to the comparing unit 603 (Fig. 4(a): S401).

The comparing unit 603 reads the abuse prevention information of the above control program stored in the abuse prevention information storage 602 previously, and compares two pieces of the abuse prevention information (Fig. 4(a): S402 to S403).

At this time, if the two pieces of the abuse prevention information are identical each other, the control program are not altered. In result, it is determined that the recording and reproducing devices is not abused (Fig. 4(a): S404 Yes to End).

On the other hand, if the two pieces of abuse prevention information are different each other, the control program are altered. Accordingly it is determined that there are some alterations in the recording and reproducing device and the device was abused (Fig. 4(a); S404 No).

In this case, like the embodiment 1, the abuse may be informed to the revoking unit 502; however, the notice is arranged to be informed to an abuse detecting server 701 via sending-receiving unit 503 in this embodiment (Fig. 4(a): S405). Besides, a unique ID for specifying the recording and reproducing device 500 should be sent together. The unique ID is the information capable of specifying the recoding and reproducing device 500, for instance it may be the IP address (Internet Protocol Address), the product number, or the lot number.

According to the above procedure, the abuse of the recording and reproducing device detected by the detecting unit 501 is sent to the abuse detecting server 701 provided at outside of the recording and reproducing device.

The abuse detecting server 701 sends to the revoking unit 502 constructing the recording and reproducing device 500 the instruction to halt the use of the recording and reproducing device, if necessary. The revoking unit 502 in response to the instruction halts the use of the recording and reproducing device 500.

Besides, the method of halting the use may be the same as the one in the embodiment 1 described before, otherwise it may be arranged that the use of the recording and reproducing device can be controlled from outside so as to make the revoked recording and reproducing device usable from the abuse detecting server (outside), thereby it is possible to carry out the flexible operating system in the recording and reproducing device. For instance, the method can be carried out by changing the operating flag from "1" to "0" or by sending a new control program again according to the instruction from the abuse detecting server, said operating flag explained in the embodiment 1.

As described above, the recording and reproducing device of the embodiment 2 detects the alteration of the control program by the detecting unit; that is to say, the abuse can be detected. Thereby it is possible to prevent the alteration of the recording and reproducing device. The alternation of the recording and reproducing device is a malicious act to stop the function of the copyright protection regulated by the copy control information. The alteration permits to copy fraudulently the digital content data with copyright in great quantity and in ease. Therefore, the system to prevent the alteration of the control program is much effective for the protection of the copyright.

In addition, the invention is arranged so as to send the state of the abuse and the information for specifying the recording and reproducing device to the abuse detecting server separated from the recording and reproducing device; thereby it is possible to know the actual conditions of the abuse that has not been known. Moreover, the invention has the effect of checking that the user is going to use the recording and reproducing device fraudulently.

Further, the instruction from the (outside) abuse detecting server can halt the use of the recording and reproducing device, thereby, where the digital content data is used fraudulently (copied fraudulently), for example, it is possible to halt the use of the recording and reproducing device by specifying the relevant device according to the digital watermark embedded in the digital content data. Specifically, the revoking processing will be performed as follows. At the time of receiving the revoking instruction from the abuse detecting server, the revoking unit 502 changes the hash value (abuse prevention information) stored in the abuse prevention information storage unit 602 into a quite different value (Fig. 4(b): S406 to S407). Since the hash value (abuse prevention information) stored in the API storage unit 602 changes at this time, where the abuse prevention information stored in the detecting unit 501 is compared with the calculated abuse prevention information after this, two pieces of the information are not identical each other. Consequently, the control unit 106 halts the working of the recording and reproducing device 500.

Furthermore, according to a simple operation that the revoking unit 502 changes the operation flag described in the embodiment 1 into "1" at receiving the revoking instruction from the abuse detecting server, the control unit 106 can also halt the working of the recording and reproducing device 500. In this case, even if the detecting unit is not provided, the working of the recording and reproducing device can halt.

Besides, the abuse detecting server sends the instruction of halting the use to the revoking unit 502, however, on the basis of the information sent to the abuse detecting server 701, the broadcast station 702 may send the instruction of halting the device to the revoking unit through the antenna 102 and the receiving device 103.

Additionally, it was arranged in the embodiment 2 that the abuse prevention information of the control program be stored in the API storage unit 602 in advance. However, it may be arranged in the recording and reproducing device capable of downloading and executing new control program from outside that the abuse prevention information of the control program be calculated at an arbitrary time and stored in the API storage unit 602 like the embodiment 1. The arbitrary timing is equivalent to the time of power-on, for example. And the abuse prevention information are compared at the time of power-on and stored in the abuse prevention information storage 602 at the time of power-off.

### [EMBODIMENT 3]

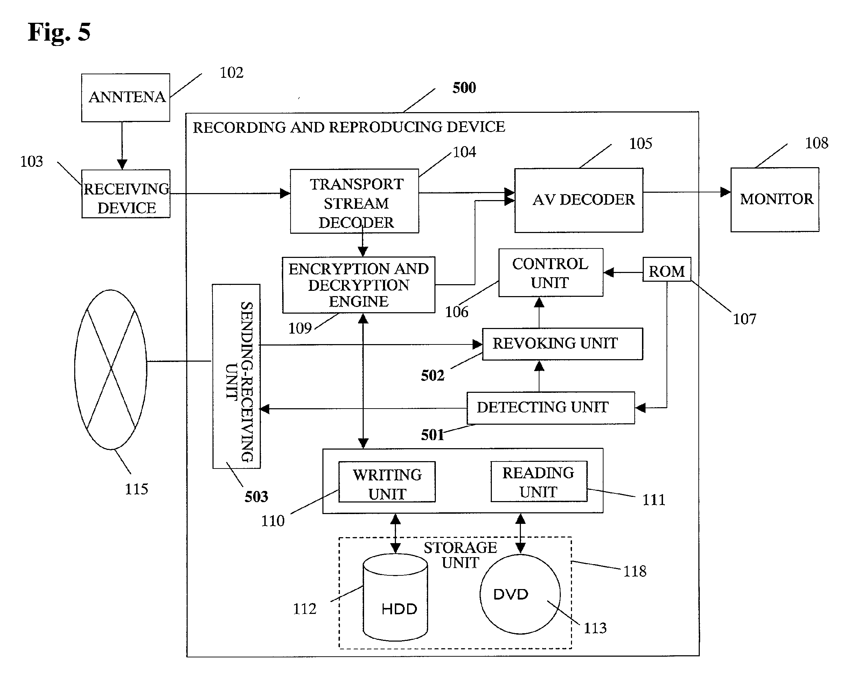

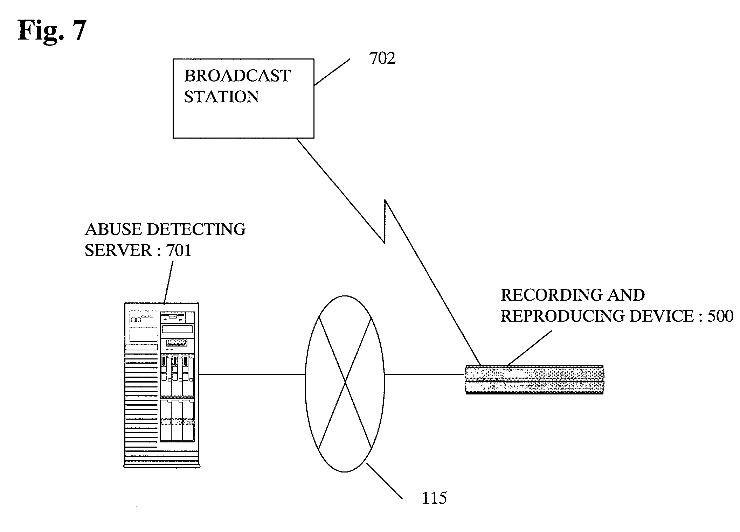

According to Figs. 5 and 7, the recording and reproducing device of the embodiment 3 is explained hereafter. Besides, since the recording and reproducing device in the embodiment 3 has many things in common with the one in the embodiments 1 and 2, this embodiment refers only to the different points.

The detecting unit 501 in the embodiment 3 is connected with the abuse detecting server at a specific time interval, for example once a month, and then sends the judging result of the abuse to the server. Besides, the judging result of the abuse is the same as the one in the embodiments 1 and 2.

If there is no abuse, the detecting unit 501 sends the control instruction to make the device usable for the next month. On the other hand, if there is the abuse, the control instruction to make the device usable is not sent out.

Under the above operating system, it is also possible to prevent the abuse from the user who is not connected with the network 115 for fear of being detected the abuse.

Besides, it is needless to say that the instruction of halting the recording and reproducing device 500 may be sent to the revoking unit 502 from the abuse detecting server 701 or the broadcast station 702 immediately or in the future if there is any abuse, and then the use of the recording and reproducing device 500 is made impossible.

## Claims

1. A recording and reproducing device recording and reproducing specific digital content data, which comprising:
detecting unit operable to detect the abuse of the digital content data or the control program controlling the recording and reproducing device; and
revoking unit operable to halt the use of the recording and reproducing device based on the abuse detected by the detecting unit.

2. A recording and reproducing device according to claim 1, in which the detecting unit comprises:
abuse prevention information calculating unit operable to calculate the abuse prevention information by means of the recorded digital content data and a specific function;
abuse prevention information storage unit to store the abuse prevention information calculated by the abuse prevention information calculating unit; and
comparing unit operable to compar, if necessary, the abuse prevention information stored in the abuse prevention information storage unit and the abuse prevention information calculated separately by the abuse prevention information calculating unit, and then judging the abuse based on the comparing result.

3. A recording and reproducing device according to claim 1, in which the detecting unit comprises:
abuse prevention information calculating unit operable to calculate the abuse prevention information by means of the control program controlling the recording and reproducing device and a specific function;
abuse prevention information storage unit to store the abuse prevention information calculated by the abuse prevention information calculating unit; and
comparing unit operable to compare, if necessary, the abuse prevention information stored in the abuse prevention information storage unit and the abuse prevention information calculated separately by the abuse prevention information calculating unit, and then judging the abuse based on the comparing result.

4. A recording and reproducing device according to claim 1, wherein at the time of detecting the abuse the detecting unit sends the detecting result to a specific abuse detecting server.

5. A recording and reproducing device according to claim 4 wherein the detecting unit further sends a unique ID specifying the recording and reproducing device to a specific abuse detecting server.

6. A recording and reproducing device according to claim 1, in which the revoking unit halts the use of the recording and reproducing device on the basis of the instruction sent from the detecting unit.

7. A recording and reproducing device according to claim 1, in which the revoking unit halts the use of the recording and reproducing device on the basis of the instruction sent from a specific abuse detecting server.

8. A recording and reproducing device according to claim 1, in which the revoking unit halts the use of the recording and reproducing device on the basis of the instruction stored in digital content data sent from the broadcast station.

9. A recording and reproducing device according to either one of claims 6 to 8, in which the revoking unit dissolves the halt of the use of the recording and reproducing device on the basis of a specific instruction.

10. A control method of controlling a recording and reproducing device recording and reproducing specific digital content data, which comprising the steps of:
detecting the abuse of the digital content data or the control program controlling the recording and reproducing device; and
halting the use of the recording and reproducing device based on the abuse detected by the step of detecting the abuse.

11. A program executing a computer controlling a recording and reproducing device recording and reproducing specific digital content data, which comprising the steps of:
detecting the abuse of the digital content data or the control program controlling the recording and reproducing device; and
halting the use of the recording and reproducing device based on the abuse detected by the step of detecting the abuse.

12. A computer readable storage medium storing a program executing a computer controlling a recording and reproducing device recording and reproducing specific digital content data, which comprising the steps of:
detecting the abuse of the digital content data or the control program controlling the recording and reproducing device; and
halting the use of the recording and reproducing device based on the abuse detected by the step of detecting the abuse.

13. An abuse detecting device provided to a recording and reproducing device recording and reproducing specific digital content data, which comprising:
abuse prevention information calculating unit operable to calculate the abuse prevention information by means of the recorded digital content data and a specific function;
abuse prevention information storage unit to store the abuse prevention information calculated by the abuse prevention information calculating unit; and
comparing unit operable to compare, if necessary, the abuse prevention information stored in the abuse prevention information storage unit and the abuse prevention information calculated separately by the abuse prevention information calculating mean, and then judging the abuse based on the comparing result.

14. An abuse detecting device provided to a recording and reproducing device recording and reproducing specific digital content data, which comprising:
abuse prevention information calculating unit operable to calculate the abuse prevention information by means of the control program controlling the recording and reproducing device and a specific function;
abuse prevention information storage unit to store the abuse prevention information calculated by the abuse prevention information calculating unit; and
comparing unit operable to compare, if necessary, the abuse prevention information stored in the abuse prevention information storage unit and the abuse prevention information calculated separately by the abuse prevention information calculating unit, and then judging the abuse based on the comparing result.

15. An abuse detecting device according to claim 13 or 14, wherein the detecting result is sent to a specific abuse detecting server when the abuse is detected.

16. A revoking device provided to a recording and reproducing device recording and reproducing specific digital content data, wherein the use of the recording and reproducing device halts on the basis of the instruction sent from a specific abuse detecting server.

17. A revoking device provided to a recording and reproducing device recording and reproducing specific digital content data, wherein the use of the recording and reproducing device halts on the basis of the instruction stored in the digital content data sent from the broadcast station.

18. A revoking device provided to a recording and reproducing device recording and reproducing specific digital content data, wherein the halt of the use of the recording and reproducing device is dissolved on the basis of a specific instruction.

19. An abuse prevention system preventing the abuse of digital content data of a recording and reproducing device recording and reproducing specific digital content data,
in which the recording and reproducing device comprises:
detecting unit operable to detect the abuse of the digital content data or the control program controlling the recording and reproducing device;
sending unit operable to send in specific time intervals to a specific abuse detecting server the detecting result of the abuse detected by the detecting unit; and
revoking unit operable to determine whether the recording and reproducing device is usable or not on the basis of the instruction sent from the abuse detecting unit, and
in which the abuse detecting server determines whether the recording and reproducing device is usable or not in response to the detecting result of the abuse sent from the recording and reproducing device.

20. A abuse prevention system according to claim 19, wherein the recording and reproducing device can be operated for a specific period on the basis of a control instruction sent from the abuse detecting server, said instruction permitting the recording and reproducing device to be operated.
